(19) Europäisches Patentamt
European Patent Office
Office européen des brevets

(11) **EP 1 738 182 B1**

(12) **EUROPÄISCHE PATENTSCHRIFT**

(45) Veröffentlichungstag und Bekanntmachung des Hinweises auf die Patenterteilung:
**03.05.2017 Patentblatt 2017/18**

(21) Anmeldenummer: **05716726.4**

(22) Anmeldetag: **17.02.2005**

(51) Int Cl.:
***G01P 21/00*** *(2006.01)*

(86) Internationale Anmeldenummer:
**PCT/EP2005/050706**

(87) Internationale Veröffentlichungsnummer:
**WO 2005/101031 (27.10.2005 Gazette 2005/43)**

(54) **LANGZEITOFFSETABGLEICH EINES SENSORS**

LONG-DURATION OFFSET COMPENSATION OF A SENSOR

COMPENSATION DE DECALAGE LONGUE DUREE D'UN CAPTEUR

(84) Benannte Vertragsstaaten:
**DE FR**

(30) Priorität: **15.04.2004 DE 102004018802**
        **24.01.2005 DE 102005003292**

(43) Veröffentlichungstag der Anmeldung:
**03.01.2007 Patentblatt 2007/01**

(73) Patentinhaber: **Continental Teves AG & Co. oHG**
**60488 Frankfurt (DE)**

(72) Erfinder:
• **HERBST, Ralf**
**56355 Nastätten (DE)**

• **NIEPELT, Mathias**
**61169 Friedberg (DE)**
• **ZIESCHANG, René**
**63073 Offenbach (DE)**

(74) Vertreter: **Brand, Markus et al**
**c/o Continental Teves AG & Co. oHG,**
**Guerickestrasse 7**
**60488 Frankfurt am Main (DE)**

(56) Entgegenhaltungen:
**EP-A- 1 288 629      US-A1- 2003 040 856**
**US-B1- 6 253 130**

**Beschreibung**

Kraftfahrzeuge mit elektronischen Bremssystemen der gehobenen Klasse nutzen in der Regel zur Erkennung des aktuellen Fahrzustands eine ganze Reihe von Sensoren, wie unter anderem Gierratensensoren, Querbeschleunigungssensoren, Längsbeschleunigungssensoren und Raddrehzahlsensoren. Besonders in Allradfahrzeugen ist ein hochgenauer Beschleunigungssensor zur Bestimmung des Radschlupfs außerordentlich wichtig. Querbeschleunigungssensoren kommen überwiegend in Fahrzeugen zum Einsatz, die mit einem elektronischen Stabilitätsprogramm (ESP) ausgestattet sind.

Ein Messsignal eines Sensors weist im allgemeinen einen Offset auf, welcher zur Nutzung des eigentlichen Sensorsignals beseitigt werden muss. Von dem mit einem Offset behafteten Rohsignal $S_{Roh}$ wird zur Berechnung des Nutzsignals $S_{Nutz}$ der Offset $S_{Off}$ subtrahiert:

$$S_{Nutz} = S_{Roh} - S_{Off}$$

Eine Möglichkeit, den Offset eines Sensors zu kompensieren, besteht darin, das Signal des Sensors durch einen Tiefpassfilter zu leiten und den Wert des Filters vom aktuellen Sensorwert zu subtrahieren. Hierdurch ergeben sich jedoch im Betrieb eines Kraftfahrzeuges eine ganze Reihe von Nachteilen.

Dabei sei $S_{Off}$ als der Wert definiert, den $S_{Roh}$ zu dem Zeitpunkt hat, zu dem die physikalische Eingangsgröße bezogen auf das Bezugssystem den Wert Null hat. Im Falle eines Beschleunigungssensors (z.B. Längsbeschleunigungssensor) ist $S_{Off}$ also der Wert, den der Sensor als $S_{Roh}$ liefert, wenn sich das Fahrzeug in der Ebene im Stillstand befindet (Wenn das Signal des Beschleunigungssensors keine Schwingung mehr zeigt).

Der Offset $S_{off}$ kann sich im Laufe der Lebensdauer des Sensors verändern, z.B. durch:

- Alterung (des Sensors oder der an der Signalverarbeitung beteiligten Komponenten),

- Abnutzung,

- dauerhafte oder zeitweise von außen einwirkende Einflüsse ( z . B. Verformung der Halteeinrichtung, Setzeigenschaften Fahrwerk),

- Temperatureinflüsse,

- andere dauerhafte Veränderungen,

und ist somit einem Langzeitdrift unterworfen. Da sich mit Veränderung von $S_{off}$ auch $S_{Nutz}$ (bei gleich bleibenden $S_{Roh}$) verändert, verringert sich die Signalgüte und damit die Genauigkeit des Sensors.Verfahren zur Offsetkompensation des elektrischen Signals eines Sensor sind aus den Dokumenten US2003040856, US6253130 und EP1288629 bekannt. Die Erfindung beschreibt ein Verfahren zur Offsetkompensation eines Sensorsignals, insbesondere eines Beschleunigungssensors. Bevorzugt handelt es sich um den Beschleunigungssensor, der Bewegungen in Fahrtrichtung eines Fahrzeuges aufnimmt (Längsbeschleunigungssensor). Durch die Erfindung soll der Offset des Signals während der Lebensdauer des Fahrzeugs mit Hilfe eines Langzeitoffsetfilters (LZOF) nachgeführt werden. Bekannte LZOF sind zeitabhängige Filter. Bei der Verwendung dieser Filter kann es vorkommen, dass Störgrößen oder bestimmte Situationen die Nachführung des Signals negativ beeinflussen.

Folgende Probleme können bei der Offsetkompensation eines Sensors auftreten:

a) Das Problem "unterschiedliche Geschwindigkeiten": Fährt das Fahrzeug z.B. langsamer bergauf als bergab (Höhe am Ende der Fahrt gleich der Höhe am Anfang der Fahrt, Geschwindigkeit konstant) , so wird sich bei einem zeitabhängigen Filter die Bergauffahrt: stärker auswirken, da sie länger dauert. Der durch den zeitabhängigen Filter berechnete Offset wird zumindest ungenau berechnet.

b) Problem "Längere Standzeiten an Hügeln": Bei zeitabhängigen Filtern ist ein Zusätzliches Kriterium erforderlich, welches das Stehen oder langsame Fahren an Steigungen "abfängt".

c) Problem "Unterschiedliche starke Beschleunigungen": Gleiches gilt für das Beschleunigen und Abbremsen mit unterschiedlichen Beträgen der Beschleunigung (in 30 Sekunden von 0 km/h auf 100 km/h und in 20 Sekunden wieder auf 0 km/h).

d) Problem "Einfluss des Zeitpunktes eines Ereignisses":

Weiterhin wirken sich Einflüsse, welche kurz vor Ende der Fahrt auftreten stärker aus, als Einflüsse, die am Anfang der Fahrt auftreten. Fährt das Fahrzeug (gleichbleibende Geschwindigkeit angenommen) z.B. auf einer Strecke von 100 km die ersten 10 km bergauf (Steigung 1 = konstant) und die letzten 10 km bergab (Steigung 1 = Steigung 2 = konstant), so wird sich die Bergabfahrt bei bekannten Tiefpassfiltern immer stärker auswirken als die Bergauffahrt.

e) Problem "Unterschiedliche Randbedingungen zu Beginn und am Ende des Abgleichs": Unterschiedliche Höhen bei Fahrtantritt und Fahrtende können den Offset fehlerhaft beeinflussen. Wenn man über mehrere km z.B. bergauf fährt, dann lernt man bedingt durch die bei der Bergauffahrt auftretende Hangabtriebskraft einen falschen Offset.

Die oben beschriebenen Probleme a) bis e) werden nach dem Verfahren der Erfindung gelöst durch die nachfolgend beschriebenen bevorzugten Merkmale A) bis E), welche einzeln oder in beliebiger Kombination miteinander bevorzugte Ausführungsformen der Erfindung sind:

A) Die Filterung des Messsignals zur Ermittlung des Offsets erfolgt bevorzugt nicht zeitabhängig, sondern wegabhängig.
Hierzu werden bevorzugt zum Festlegen von Wegintervallen zunächst Zeitpunkte ermittelt, an denen einzelne Zwischenberechnungsschritte für die Offsetberechnung durchgeführt werden, denn diese Berechnung erfolgt nicht zwingend in jedem Durchlaufzeitpunkt des als Regelschleife ausgeführten Regelprogramms (Reglerloop).
Dazu wird bevorzugt aus einem Referenzwert (z.B. Fahrzeuggeschwindigkeit auf Basis der Raddrehzahlsensoren) ein momentan zurückgelegter Teilweg zum Beispiel aus einem Weginkrement pro Reglerloop bestimmt. Dies kann bevorzugt dadurch erfolgen, dass in jedem Reglerloop der konstanten Dauer $t_{Const}$ die Fahrzeugreferenzgeschwindigkeit $V_{ref}$ aufaddiert wird. Diese Summe wird bei jedem Zwischenberechnungsschritt neu berechnet. Ein Zwischenberechnungsschritt kann zum Beispiel zum Zeitpunkt des Zündungsneustarts beginnen. Zu Beginn der Fahrt ist der berechnete Teilweg = 0. Der Teilweg erhöht sich in jedem Reglerloop, wenn das Fahrzeug fährt. Erreicht oder übersteigt der momentane Teilweg einen als Konstante festgelegten Grenzwert ($D_{Grenz}$), wird ein einzelner Zwischenberechnungsschritt zur späteren Kompensationswertberechnung durchgeführt.
Für jede Bestimmung des Kompensationswertes sind normalerweise mehrere Zwischenberechnungsschritte notwendig. Die Bestimmung der Berechnungsschritte in Abhängigkeit des zurückgelegten Weges kann auch als eine Triggerung der Zwischenberechung aufgefasst werden.
Nach der Berechnung wird der neue Wert "Teilweg (neu)" entweder auf Null zurückgesetzt oder durch die Formel

$$\texttt{Teilweg(neu) = Teilweg(aktuell) - D}_{\texttt{Grenz}}$$

bestimmt.
Mit diesem Verfahren wird das Problem a) und automatisch auch Problem b) gelöst.
Die Konstante $D_{Grenz}$ kann je nach den Anforderungen im Bereich von wenigen Zentimetern bis einigen Metern liegen. Ein unterer Grenzwert zur Bestimmung dieser Konstante ergibt sich aus der Entfernung, die das Fahrzeug bei maximal erreichbarer Geschwindigkeit je Zykluszeit des Rechensystems (Loop) zurücklegen kann. Eine obere Grenze ergibt sich aus der erforderlichen die Genauigkeit der Filterung. Bevorzugt sind Werte unterhalb von etwa 10 Metern und oberhalb von etwa 50 cm, da diese Werte noch eine gute Genauigkeit ergeben.
B) Es wird zur Bestimmung des Offsets nicht nur das Rohsignal $S_{Roh}$ oder das Nutzsignal $S_{Nutz}$ verwendet, sondern es wird ein Differenzsignal $S_{Dif}$ aus dem Nutzsignal und einem Referenzsignal (insbesondere die aus den Radsignalen berechnete Fahrzeugreferenzbeschleunigung $\partial v_{ref}/\partial t$ oder ein von dieser Größe abgeleitetes Signal) zum Beispiel nach der Formel

$$\texttt{S}_{\texttt{Dif}} \texttt{ = S}_{\texttt{Nutz}} \texttt{ - S}_{\texttt{Ref}}$$

gebildet. Damit kann das zur Filterung verwendete Signal größtenteils von durch Fahrzeugbeschleunigungen hervorgerufenen Einflüssen befreit werden. Mit diesem Lösungselement wird das in Punkt c) angesprochene Problem behoben.
C) Die eigentliche Berechnung des Offsets bzw. die Durchführung der Offsetkompensation in Verfahrensmaßnahme C) wird unabhängig von den Schritten in B) durchgeführt, zum Beispiel dann, wenn eine ausreichende Anzahl von Werten zu den Berechnungszeitpunkten in B) bestimmt worden sind. Bevorzugt wird hierzu zunächst ein Integral (Summe = $S_{Sum}$) über $S_{Dif}$ in einem festgelegten Zeitbereich oder insbesondere Wegbereich, (zum Beispiel zwischen dem Beginn und dem Ende eines Zündungslaufs) gebildet.

Die Summe bzw. das Integral wird vom Startzeitpunkt ($T_{Start}$) bis zum Endzeitpunkt ($T_{End}$) berechnet/gebildet. Die Dauer kann mehrere Zündungsläufe, eine minimale Gesamtstrecke seit dem letzten Endzeitpunkt $T_{End}$, dem gesamten Zündungslauf (Zeit, in der das Kfz durch den Fahrer bis zum Abschalten des Motors in Betrieb ist) oder nur einem Teil davon entsprechen. Während dieser Zeit wird je Berechnungszeitpunkt (siehe Punkt B)) bzw. je Integrationsschritt ein Zähler $Z_{sum}$ inkrementiert und damit die Anzahl der Integrationsschritte gezählt. Zum Zeitpunkt $T_{End}$ erfolgt spätestens die Berechnung nach der Formel:

$$S_{Delta} = S_{Sum} / Z_{Sum}$$

Wobei $S_{Delta}$ angibt wie groß die durch den aktuellen Filtervorgang berechnete Abweichung zu dem bereits früher gespeicherten Offset $S_{Off}$ ist (Dieser frühere Offset liegt z.B. gespeichert in einem EEPROM seit dem letzten Zündungslauf vor). Wenn der frühere Offset mit dem aktuell berechneten Offset genau übereinstimmt, $S_{Delta}$ gleich Null. Dann entspricht der aktuelle Wert von $S_{Off}$ dem abgespeicherten Wert von $S_{Off}$ und es ist keine Abweichung vorhanden.

Entsprechend einem weiteren Ausführungsbeispiel kann das Verfahren durch eine Wertebereichsbegrenzung ergänzt werden. Erstreckt sich die Offsetkompensation über mehrere Zündungsläufe, so werden die insbesondere die Parameter $S_{sum}$ und $Z_{Sum}$ bei dem Zustand "Zündung aus" in einem nicht-flüchtigen Speicher abgelegt und beim nächsten Fahrzeug-Start wieder aus dem nicht-flüchtigen Speicher gelesen. Dabei können die Parameter skaliert oder nicht skaliert abgelegt werden.

Dieses Element behebt hauptsächlich mit Punkt d) aber auch mit Punkt a) und c) verbundene Probleme.

D) Das erfindungsgemäße Verfahren lässt sich bevorzugt dadurch ergänzen, dass für den absoluten Offsetwert $S_{Off}$ obere und untere Grenzwerte festgelegt werden, damit ausgeschlossen ist, das durch das Verfahren eine Korrektur des Offsetwertes in einem Maße durchgeführt wird, welche die physikalisch möglichen Grenzen einer Offsetabweichung übersteigt.

Darüber hinaus kann nach einem weiteren bevorzugten Schritt des Verfahrens ein Grenzwert festgelegt werden, über diesen sich eine betragsmäßige Korrektur des Offsets nicht erstrecken darf. Hierdurch wird erreicht, dass eine Korrektur $S_{Off}$ bei dem aktuellen Kompensationsvorgang nicht zu groß ist. Der hierzu verwendete Grenzwert kann insbesondere aus der zurückgelegten Fahrstrecke für diesen Kompensationsvorgang berechnet werden. Zum Beispiel ergibt sich der Grenzwert aus $Z_{Sum}$ oder einer beliebigen anderen Weginformation. Je größer der bei der aktuellen Filterung zurückgelegte Weg ist, desto geringer ist die Gefahr, dass der LZOF auf Grund unterschiedlicher Anfangs- und Endhöhen einen falschen Wert aufzeigt. Der Zusammenhang zwischen dem zurückgelegten Weg und dem hier bestimmten Grenzwert kann linear oder nichtlinear sein. Die Bestimmung des maximal zulässigen Wertes kann auch einfach aus einem konstanten Parameter erfolgen.

Damit wird das in Punkt e) angesprochene Problem behoben.

E) Um sicher zu sein, dass der Lernprozess nicht durch fehlerhafte Eingangssignale oder unplausible Fahrsituationen, negativ beeinflusst wird, kann ein Fehlerzähler verwendet werden, welcher insbesondere bei einer oder einer Kombination der folgenden Situationen inkrementiert wird.

Der Fehlerzähler wird bevorzugt inkrementiert, wenn fehlerhafte Eingangssignale vorliegen, beispielsweise je nach Berechnung der Referenzgeschwindigkeit entweder bei Störung mindestens eines Radsensorsignals (oder dessen Signalverarbeitungskette) oder bei Störung mindestens zwei Radsensorsignale (oder deren Signalverarbeitungskette) oder bei Störung des Beschleunigungssensors oder dessen Signalverarbeitungskette.

Der Fehlerzähler wird bevorzugt inkrementiert, wenn unplausible bzw. ungewöhnliche Fahrsituationen vorliegen, bei denen der Lernalgorithmus durch fehlerhaft berechnete Referenzgeschwindigkeit negativ beeinflusst werden könnte, insbesondere wenn eine der Regelfunktionen Antiblockiersystem, Traktion Controll, Elektronisches Stabilitätsprogramm, Elektronischer Bremsassistent, Hydraulischer Bremsassistent aktiv ist. Eine Kombination oder Auswahl aus diesen Regelfunktionen oder anderen Regelfunktionen ist möglich, wobei sich diese dann bevorzugt nach den im Fahrzeug verfügbaren Regelfunktionen und deren fahrzeugspezifischen Einflüsse auf den Lernalgorithmus richtet.

Liegen fehlerhaften Eingangssignale bzw. unplausible Fahrsituationen vor, wird bevorzugt die Berechnung von $S_{Sum}$ und/oder $Z_{Sum}$ unterbrochen. Weiterhin wird bevorzugt zum Zeitpunkt $T_{End}$ und beim Abspeichern von $S_{Sum}$ und $Z_{Sum}$ im nicht flüchtigen Speicher geprüft, ob der Fehlerzähler einen Grenzwert, welcher sich aus einer konstanten Schwelle und einer wegabhängigen Anteil bestehen kann, überschritten hat. Ist diese Schwelle überschritten, so wird der Lernalgorithmus neu initialisiert indem die Parameter $S_{Sum}$ und $Z_{Sum}$ im nicht flüchtigen Speicher zurück gesetzt werden und Korrektur des Offsets verboten wird.

Das Verfahren nach der Erfindung besitzt neben der Lösung der obigen Probleme noch folgende Vorteile:

1. Das Stehen eines Kfz am Hang beeinflusst den gelernten Offset nicht, da dabei kein Weg zurück gelegt wird.

2. Bei langsamer Fahrt eines Kfz, z.B. bergauf im Gelände oder an Anstiegen im Stau erfolgt durch das Verfahren eine automatisch Wichtung, so dass eine geringere unerwünschte Beeinflussung des ermittelten Offsets erreicht wird.

3. Bei hohen Geschwindigkeiten des Kfz ist die Fahrbahn meist sehr viel ebener (z.B. auf einer Autobahn) als bei langsamerer Fahrt (z.B. in einem Parkhaus). Dies wird automatisch durch das erfindungsgemäße Verfahren berücksichtigt.

4. Vorteilhaft für die Implementation auf einem Mikrorechner ist, dass das Verfahren lediglich auf einfache Berechnungsschritte zurückgreift. (Es werden fast ausschließlich Addition, Subtraktion und Vergleiche benötigt.)

Es ist ebenso gut möglich, pro Reglerloop eine Summe oder ein Integral etwa nach der Formel:

Fahrzeugreferenzgeschwindigkeit * Konstante * Messignal

zu berechnen. Damit kann eine ähnliche genaue Kompensation oder sogar eine genauere Kompensation erzielt werden. Jedoch ist bei diesem alternativen Verfahren ein erhöhter Bedarf an Rechenzeit vorhanden.

Eine Kompensation mit weiter verbesserter Genauigkeit lässt sich erzielen, wenn der Grenzwert $D_{Grenz}$ relativ klein gehalten wird und bei höheren Geschwindigkeiten die Integralbildung derart erfolgt, dass mehrmals je Berechnungsschritt integriert wird. $S_{Dif}$ wird dann z.B. zweimal (oder dreimal je nach Geschwindigkeit) abgespeichert.

Es ist auch möglich, bei der Kompensation Beschleunigungs- und Abbremsphasen durch eine Abfrage bei der Berechnung mit einzubeziehen. Die Bildung des Wertes $S_{Ref}$ kann in diesem Fall sogar entfallen.

Bevorzugt kann das Verfahren der Erfindung zusätzlich zur Berechnung eines Höhenprofils der Fahrt verwendet werden. Hierzu wird der aus $S_{Sum}$ berechneter Wert verwendet. Voraussetzung ist, dass der Sensor schon relativ gut abgeglichen ist, $S_{Delta}$ also bereits kleine Werte aufweist. Dieses Höhenprofil kann auch in einer weiteren bevorzugten Verwendung als unterstützendes Signal für Navigationssysteme eingesetzt werden.

Das Verfahren lässt sich außerdem nutzen, die zurückgelegte Strecke wiederzugeben. Diese Information könnte z.B. bei der Ermittlung des Tachostandes von Interesse sein.

Bei der geschilderten Lösung kann sich das Problem ergeben, dass bei einem Fahrzeug, welches nur auf Kurzstrecken bewegt wird, keine Offsetkompensation möglich ist. Um dieses Problem zu lösen, wird das erfindungsgemäße Verfahren bevorzugt durch einen Verfahrensschritt ergänzt, bei dem ein bestimmter Wert definiert wird, um den bei jedem noch so kurzen Zündungslauf der Offset unabhängig vom zurückgelegten Weg korrigiert werden darf.

Weitere bevorzugte Ausführungsformen ergeben sich aus den Unteransprüchen und der nachfolgenden Beschreibung der Figuren.

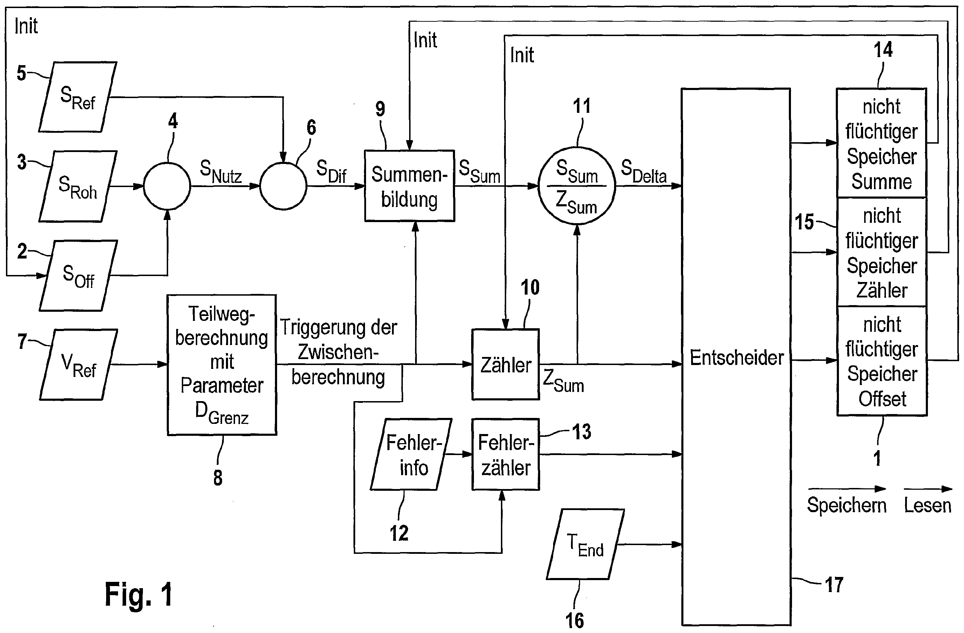

Nachfolgend wird die Erfindung an Hand eines Beispiels näher erläutert. Dabei zeigt Fig. 1 einen Überblick über einen erfindungsgemäßen Verfahrensablauf.

Beim Start des Fahrzeugs wird der zuletzt ermittelte Offset $S_{Off}$ aus dem nichtflüchtigen Speicher (1) ausgelesen und für die weitere Verarbeitung bereitgestellt (Verfahrensschritt 2). Weiterhin wird von dem Sensor, beispielsweise einem Beschleunigungssensor, das mit einem Offset behaftete Rohsignal $S_{Roh}$ ermittelt (Verfahrensschritt 3). Von dem mit einem Offset behafteten Rohsignal $S_{Roh}$ wird zur Berechnung des Nutzsignals $S_{Nutz}$ der Offset $S_{Off}$ subtrahiert (Verfahrensschritt 4):

$$S_{Nutz} = S_{Roh} - S_{Off}$$

Dieses Nutzsignals $S_{Nutz}$ kann nun von den dafür vorgesehenen Fahrzeugkomponenten (beispielsweise ESP) verwendet werden.

Weiterhin wird nicht nur das Rohsignal $S_{Roh}$ oder das Nutzsignal $S_{Nutz}$ bestimmt, sondern es wird ein Differenzsignal $S_{Dif}$ aus dem Nutzsignal und einem Referenzsignal $S_{Ref}$ (insbesondere die aus den Radsignalen berechnete Fahrzeugreferenzbeschleunigung $\partial v_{ref}/\partial t$ oder ein von dieser Größe abgeleitetes Signal) nach der Formel

$$S_{Dif} = S_{Nutz} - S_{Ref}$$

,

Gebildet (Verfahrensschritte 5 und 6). Damit kann das zur Filterung verwendete Signal größtenteils von durch Fahrzeugbeschleunigungen hervorgerufenen Einflüssen befreit werden.

Da sich die Qualität des Offsets $S_{Off}$ mit der Zeit verschlechtert, wird wegabhängig eine Neubestimmung des Offset $S_{Off}$ durchgeführt. Hierzu werden bevorzugt zum Festlegen von Wegintervallen zunächst Zeitpunkte ermittelt, an denen einzelne Zwischenberechnungsschritte für die Offsetberechnung durchgeführt werden, denn diese Berechnung erfolgt nicht zwingend in jedem Durchlaufzeitpunkt des als Regelschleife ausgeführten Regelprogramms (Reglerloop).

Dazu wird bevorzugt aus dem Referenzwert $V_{Ref}$ (Verfahrensschritt 7, z.B. Fahrzeuggeschwindigkeit auf Basis der Raddrehzahlsensoren) ein momentan zurückgelegter Teilweg aus einem Weginkrement pro Reglerloop bestimmt. Dies kann bevorzugt dadurch erfolgen, dass in jedem Reglerloop der konstanten Dauer $t_{Const}$ die Fahrzeugreferenzgeschwindigkeit $V_{ref}$ aufaddiert wird. Diese Summe wird bei jedem Zwischenberechnungsschritt neu berechnet. Ein Zwischenberechnungsschritt kann zum Beispiel zum Zeitpunkt des Zündungsneustarts beginnen. Zu Beginn der Fahrt ist der berechnete Teilweg = 0. Der Teilweg erhöht sich in jedem Reglerloop, wenn das Fahrzeug fährt. Erreicht oder übersteigt der momentane Teilweg einen als Konstante festgelegten Grenzwert $D_{Grenz}$ (Verfahrensschritt 8), wird ein einzelner Zwischenberechnungsschritt zur späteren Kompensationswertberechnung durchgeführt.

Für jede Bestimmung des Kompensationswertes sind normalerweise mehrere Zwischenberechnungsschritte notwendig. Die Bestimmung der Berechnungsschritte in Abhängigkeit des zurückgelegten Weges kann auch als eine Triggerunq der Zwischenberechung aufgefasst werden.

Nach der Berechnung wird der neue Wert "Teilweg (neu)" entweder auf Null zurückgesetzt oder durch die Formel

$$Teilweg(neu) = Teilweg(aktuell) - D_{Grenz}$$

bestimmt.

Die eigentliche Berechnung des Offsets bzw. die Durchführung der Offsetkompensation wird dann durchgeführt, wenn eine ausreichende Anzahl von Werten zu den Berechnungszeitpunkten in bestimmt worden sind. Bevorzugt wird hierzu zunächst ein Integral (Summe = $S_{Sum}$) über $S_{Dif}$ in einem festgelegten Wegbereich gebildet (Verfahrensschritt 9).

Weiterhin wird je Berechnungszeitpunkt bzw. je Integrationsschritt ein Zähler $Z_{Sum}$ inkrementiert und damit die Anzahl der Integrationsschritte gezählt (Verfahrensschritt 10). Dabei kann, insbesondere bei kurzen Fahrten, ein Teil der Summanden bzw. der Zähler aus den nichtflüchtigen Speichern (14, 15) ausgelesen werden. Anschließend erfolgt die Berechnung nach der Formel (Verfahrensschritt 11):

$$S_{Delta} = S_{Sum} / Z_{Sum}$$

Wobei $S_{Delta}$ angibt wie groß die durch den aktuellen Filtervorgang berechnete Abweichung zu dem bereits früher gespeicherten Offset $S_{Off}$ ist. Dieser frühere Offset liegt noch gespeichert in dem nichtflüchtigen Speicher (1, z.B. EEPROM) vor. Wenn der frühere Offset mit dem aktuell berechneten Offset genau übereinstimmt, ist $S_{Delta}$ gleich Null. Dann entspricht der aktuelle Wert von $S_{Off}$ dem abgespeicherten Wert von $S_{off}$ und es ist keine Abweichung vorhanden. Ist $S_{Delta}$ ungleich Null, wird ein neuer Offset $S_{Off}$ gemäß der Zuordnung:

$$S_{Off} = S_{Off} + S_{Delta}$$

gebildet.

Um sicher zu sein, dass der Lernprozess nicht durch fehlerhafte Eingangssignale oder unplausible Fahrsituationen (Verfahrensschritt 12), negativ beeinflusst wird, wird weiterhin ein Fehlerzähler verwendet, welcher insbesondere bei einer oder einer Kombination der folgenden Situationen inkrementiert wird.

Der Fehlerzähler wird bevorzugt inkrementiert (Verfahrensschritt 13), wenn fehlerhafte Eingangssignale vorliegen, beispielsweise je nach Berechnung der Referenzgeschwindigkeit entweder bei Störung mindestens eines Radsensorsignals (oder dessen Signalverarbeitungskette) oder bei Störung mindestens zwei Radsensorsignale (oder deren Signalverarbeitungskette) oder bei Störung des Beschleunigungssensors oder dessen Signalverarbeitungskette.

Der Fehlerzähler wird bevorzugt inkrementiert (Verfahrensschritt 13), wenn unplausible bzw. ungewöhnliche Fahrsituationen vorliegen, bei denen der Lernalgorithmus durch fehlerhaft berechnete Referenzgeschwindigkeit negativ beeinflusst werden könnte, insbesondere wenn eine der Regelfunktionen Antiblockiersystem, Traktion Controll, Elektronisches Stabilitätsprogramm, Elektronischer Bremsassistent, Hydraulischer Bremsassistent aktiv ist. Eine Kombination oder Auswahl aus diesen Regelfunktionen oder anderen Regelfunktionen ist möglich, wobei sich diese dann bevorzugt nach den im Fahrzeug verfügbaren Regelfunktionen und deren fahrzeugspezifischen Einflüsse auf den Lernalgorithmus richtet.

Liegen fehlerhaften Eingangssignale bzw. unplausible Fahrsituationen vor, wird bevorzugt zum Zeitpunkt $T_{End}$ (Verfahrensschritt 16) und beim Abspeichern von $S_{Sum}$ und $Z_{Sum}$ im nicht flüchtigen Speicher geprüft (Verfahrensschritt 17), ob der Fehlerzähler einen Grenzwert, welcher sich aus einer konstanten Schwelle und einer wegabhängigen Anteil bestehen kann, überschritten hat. Ist diese Schwelle überschritten, so wird der Lernalgorithmus neu initialisiert indem die Parameter $S_{Sum}$ und $Z_{Sum}$ im nicht flüchtigen Speicher zurück gesetzt werden und Korrektur des Offsets verboten wird. Ist diese Schwelle nicht überschritten, werden die momentan gültigen Werte für $S_{Off}$, $S_{Sum}$ und $Z_{Sum}$ in den nichtflüchtigen Speichern (1, 14, 15) abgespeichert.

Erstreckt sich die Offsetkompensation über mehrere Zündungsläufe, so werden die insbesondere die Parameter $S_{Sum}$ und $Z_{Sum}$ bei dem Zustand "Zündung aus" in einem nicht-flüchtigen Speicher abgelegt und beim nächsten Fahrzeug-Start wieder aus dem nicht-flüchtigen Speicher gelesen. Dabei können die Parameter skaliert oder nicht skaliert abgelegt werden.

## Patentansprüche

1. Verfahren zur Offsetkompensation des elektrischen Signals eines Sensors, insbesondere eines Kraftfahrzeugssensors, wie z.B. eines Beschleunigungssensors, durch Bestimmung eines Kompensationswertes ($S_{Off}$), wobei der Kompensationswert ($S_{Off}$) während der Lebensdauer des Sensors langfristig nachgeführt wird, **dadurch gekennzeichnet, dass** die Nachführung des Kompensationswertes ($S_{Off}$) in Abhängigkeit des durch das Fahrzeug zurückgelegten Weges durchgeführt wird.

2. Verfahren nach Anspruch 1, **dadurch gekennzeichnet, dass** Wegintervalle zum Festlegen von Zwischenberechnungszeitpunkten herangezogen werden und zu den Zwischenberechnungszeitpunkten eine aktuelle Zwischenberechnung für die Berechnung des Kompensationswertes getriggert wird.

3. Verfahren nach Anspruch 1 oder 2, **dadurch gekennzeichnet, dass** die eigentliche Berechnung des Kompensationswertes ($S_{Off}$) bzw. die Durchführung der Offsetkompensation erst durchgeführt wird, wenn eine ausreichende Anzahl von Kompensationswerten bzw. Kompensationskorrekturwerten (17) bestimmt worden sind.

4. Verfahren nach Anspruch 3, **dadurch gekennzeichnet, dass** die Kompensationswerte bzw. Kompensationskorrekturwerte entsprechend der zurückgelegten Wege gewichtet werden, an denen die jeweiligen Kompensationswerte bzw. Kompensationskorrekturwerte vorlagen.

5. Verfahren nach mindestens einem der vorhergehenden Ansprüche, **dadurch gekennzeichnet, dass** für den absoluten Kompensationswert ($S_{Off}$) obere und untere Grenzwerte festgelegt werden, die der Kompensationswert ($S_{Off}$) nicht über- oder unterschreiten darf.

6. Verfahren nach mindestens einem der vorhergehenden Ansprüche, **dadurch gekennzeichnet, dass** ein Grenzwert (8) festgelegt wird, über diesen sich eine betragsmäßige Korrektur des Kompensationswertes ($S_{Off}$) nicht erstrecken darf.

7. Verfahren nach mindestens einem der vorhergehenden Ansprüche, **dadurch gekennzeichnet, dass** für die Offsetkompensation neben dem Rohsignal des Sensors auch ein Referenzsignal ($S_{Ref}$) eines weiteren Sensors genutzt wird (5), welcher die Messgröße (z.B. Beschleunigungssignal) des Sensors indirekt wiedergibt oder aus dessen Signal sich die gewünschte Messgröße (z.B. Beschleunigung) ableiten lässt und wobei insbesondere die Differenz ($S_{Dif}$) (6) aus dem offsetkompensierten Nutzsignal ($S_{Nutz}$) (4) und dem Referenzsignal ($S_{Ref}$) (5) gebildet wird.

8. Verfahren nach Anspruch 7, **dadurch gekennzeichnet, dass** ein Integral oder eine Summe ($S_{Sum}$) (9) über die Differenz ($S_{Dif}$) (6) in den Grenzen eines festgelegten Zeitbereichs oder insbesondere Wegbereichs, zum Beispiel zwischen dem Beginn und dem Ende eines Zündungslaufs, gebildet wird, aus dem bzw. aus der die Korrektur des Sensoroffsets bestimmt wird.

**9.** Verfahren nach Anspruch 8, **dadurch gekennzeichnet, dass** je Integrationsschritt bzw. je Summationsschritt ein Zähler ($Z_{Sum}$) inkrementiert (10) und damit die Anzahl der Integrationsschritte bzw. Summationsschritte gezählt wird.

**10.** Verfahren nach Anspruch 9, **dadurch gekennzeichnet, dass** der Kompensationskorrekturwert entsprechend der Formel $S_{Delta} = S_{Sum}/Z_{Sum}$ (11) bestimmt wird.

**11.** Verfahren nach mindestens einem der Ansprüche 8 bis 10, **dadurch gekennzeichnet, dass** aus dem Wert ($S_{Sum}$) ein Höhenprofil der Fahrt bestimmt wird.

**12.** Verfahren nach mindestens einem der Ansprüche 9 bis 11, **dadurch gekennzeichnet, dass** aus dem Zähler ($Z_{Sum}$) (10) die zurückgelegte Strecke bestimmt wird.

**13.** Verfahren nach mindestens einem der vorhergehenden Ansprüche, **dadurch gekennzeichnet, dass** dem ein vorgegebener Wert für den zurückgelegten Weg definiert wird und im Fall, dass der zurückgelegte Weg kleiner als der vorgegebene Wert ist, der der Kompensationswert ($S_{Off}$) unabhängig vom zurückgelegten Weg korrigiert werden darf.

**14.** Verfahren nach mindestens einem der vorhergehenden Ansprüche, **dadurch gekennzeichnet, dass** bereits bestimmte Zwischenwerte, insbesondere ($S_{Sum}$) und ($Z_{Sum}$) , und/oder Kompensationswerte ($S_{Off}$) bzw. Kompensationskorrekturwerte in einem nicht-flüchtigen Speicher abgelegt (1,14,15) werden.

**15.** Verfahren nach Anspruch 14, **dadurch gekennzeichnet, dass** dem ein vorgegebener Wert für den zurückgelegten Weg definiert wird und im Fall, dass der zurückgelegte Weg kleiner als der vorgegebene Wert ist (17), bereits bestimmte Zwischenwerte, insbesondere ($S_{Sum}$) und ($Z_{Sum}$), in einem nicht-flüchtigen Speicher abgelegt (14,15) werden.

**16.** Verfahren nach mindestens einem der vorhergehenden Ansprüche, **dadurch gekennzeichnet, dass** bei der Kompensation Beschleunigungs- oder Abbremsphasen durch eine Abfrage festgestellt werden und eine Kompensation dann entfällt.

**17.** Verfahren nach mindestens einem der vorhergehenden Ansprüche, **dadurch gekennzeichnet, dass** überprüft wird, ob ein fehlerhaftes Eingangssignal (16,17) vorliegt.

**18.** Verfahren nach mindestens einem der vorhergehenden Ansprüche, **dadurch gekennzeichnet, dass** überprüft wird, ob eine ungewöhnliche Fahrsituationen vorliegt.

**19.** Verfahren nach Anspruch 18, **dadurch gekennzeichnet, dass** überprüft wird, ob mindestens eine der Regelfunktionen Antiblockiersystem, Traktion Controll, Elektronisches Stabilitätsprogramm, Elektronischer Bremsassistent, Hydraulischer Bremsassistent aktiv ist.

**20.** Verfahren nach mindestens einem der vorhergehenden Ansprüche, **dadurch gekennzeichnet, dass** ein Fehlerzähler (13) verwendet wird.

**21.** Verfahren nach Anspruch 21, **dadurch gekennzeichnet, dass** der Fehlerzähler (13) erhöht wird, wenn ein fehlerhaftes Eingangssignal (5) und/oder eine ungewöhnliche Fahrsituation vorliegen (12).

**22.** Computerprogrammprodukt, **dadurch gekennzeichnet, dass** dieses einen Algorithmus enthält, welcher in Verbindung mit einem Mikrorechner das Verfahren gemäß mindestens einem der Ansprüche 1 bis 21 ausführt.

**23.** Verwendung des Verfahrens nach mindestens einem der Ansprüche 1 bis 21 in einem elektronischen Bremsensteuergerät.

**Claims**

**1.** Method for compensating for the offset of the electrical signal from a sensor, in particular a motor vehicle sensor, for example an acceleration sensor, by determining a compensation value ($S_{Off}$), the compensation value ($S_{Off}$) being tracked in the long term during the service life of the sensor, **characterized in that** the compensation value

($S_{Off}$) is tracked on the basis of the path travelled by the vehicle.

2. Method according to Claim 1, **characterized in that** path intervals are used to stipulate intermediate calculation times, and a current intermediate calculation for calculating the compensation value is triggered at the intermediate calculation times.

3. Method according to Claim 1 or 2, **characterized in that** the compensation value ($S_{Off}$) is actually calculated or the offset compensation is carried out only when a sufficient number of compensation values or compensation correction values (17) has been determined.

4. Method according to Claim 3, **characterized in that** the compensation values or compensation correction values are weighted according to the paths travelled on which the respective compensation values or compensation correction values were present.

5. Method according to at least one of the preceding claims, **characterized in that** upper and lower limit values are stipulated for the absolute compensation value ($S_{Off}$) and must not be exceeded or undershot by the compensation value ($S_{Off}$) .

6. Method according to at least one of the preceding claims, **characterized in that** a limit value (8) is stipulated, beyond which a correction of the absolute value of the compensation value ($S_{Off}$) must not extend.

7. Method according to at least one of the preceding claims, **characterized in that**, in addition to the raw signal from the sensor, a reference signal ($S_{Ref}$) (5) from a further sensor is also used for the offset compensation, which indirectly represents the measurement variable (for example acceleration signal) of the sensor or the signal from which can be used to derive the desired measurement variable (for example acceleration), the difference ($S_{Dif}$) (6), in particular, being formed from the offset-compensated useful signal ($S_{Nutz}$) (4) and the reference signal ($S_{Ref}$) (5).

8. Method according to Claim 7, **characterized in that** an integral or a sum ($S_{Sum}$) (9) of the difference ($S_{Dif}$) (6) is formed in the limits of a stipulated time range or a path range, in particular, for example between the beginning and the end of an ignition run, and is used to determine the correction of the sensor offset.

9. Method according to Claim 8, **characterized in that** a counter ($Z_{Sum}$) (10) is incremented for each integration step or each summation step and the number of integration steps or summation steps is therefore counted.

10. Method according to Claim 9, **characterized in that** the compensation correction value is determined according to the formula $S_{Delta} = S_{Sum}/Z_{Sum}$ (11) .

11. Method according to at least one of Claims 8 to 10, **characterized in that** an elevation profile of the journey is determined from the value ($S_{Sum}$) .

12. Method according to at least one of Claims 9 to 11, **characterized in that** the distance covered is determined from the counter ($Z_{Sum}$) (10).

13. Method according to at least one of the preceding claims, **characterized in that** a predefined value is defined for the path travelled and the compensation value ($S_{Off}$) can be corrected independently of the path travelled if the path travelled is less than the predefined value.

14. Method according to at least one of the preceding claims, **characterized in that** already determined intermediate values, in particular ($S_{Sum}$) and ($Z_{Sum}$), and/or compensation values ($S_{Off}$) or compensation correction values are stored in a non-volatile memory (1, 14, 15).

15. Method according to Claim 14, **characterized in that** a predefined value is defined for the path travelled, and already determined intermediate values, in particular ($S_{Sum}$) and ($Z_{Sum}$), are stored in a non-volatile memory (14, 15) if the path travelled is less than the predefined value (17).

16. Method according to at least one of the preceding claims, **characterized in that** acceleration or braking phases are determined during compensation by means of a query and compensation is then dispensed with.

**17.** Method according to at least one of the preceding claims, **characterized in that** a check is carried out in order to determine whether there is an incorrect input signal (16, 17).

**18.** Method according to at least one of the preceding claims, **characterized in that** a check is carried out in order to determine whether there is an unusual driving situation.

**19.** Method according to Claim 18, **characterized in that** a check is carried out in order to determine whether at least one of the control functions of the anti-lock braking system, traction control, electronic stability program, electronic braking assistant or hydraulic braking assistant is active.

**20.** Method according to at least one of the preceding claims, **characterized in that** an error counter (13) is used.

**21.** Method according to Claim 21, **characterized in that** the error counter (13) is incremented if there is an incorrect input signal (5) and/or an unusual driving situation (12).

**22.** Computer program product, **characterized in that** it contains an algorithm which, in conjunction with a microcomputer, carries out the method according to at least one of Claims 1 to 21.

**23.** Use of the method according to at least one of Claims 1 to 21 in an electronic brake control unit.

## Revendications

**1.** Procédé de compensation du décalage du signal électrique d'un capteur, en particulier d'un capteur pour véhicule automobile, par exemple d'un capteur d'accélération, par détermination d'une valeur de compensation ($S_{off}$), la valeur de compensation ($S_{off}$) étant suivie à long terme pendant la durée de vie du capteur,
**caractérisé en ce que**
le suivi de la valeur de compensation ($S_{Off}$) est réalisé en fonction de la distance parcourue par le véhicule.

**2.** Procédé selon la revendication 1, **caractérisé en ce que** des intervalles de déplacement interviennent pour la détermination d'instants de calcul intermédiaire et **en ce qu'**aux instants de calcul intermédiaire, un calcul intermédiaire effectif est activé pour le calcul de la valeur de la compensation.

**3.** Procédé selon les revendications 1 ou 2, **caractérisé en ce que** le calcul proprement dit de la valeur de compensation ($S_{Off}$) ou l'exécution de la compensation du décalage ne sont réalisés que si un nombre suffisant de valeurs de compensation ou de valeur (17) de correction de compensation ont été déterminées.

**4.** Procédé selon la revendication 3, **caractérisé en ce que** les valeurs de compensation ou les valeurs de correction de la compensation sont pondérées en fonction de la distance parcourue qui correspond à chaque valeur de compensation ou valeur de correction de la compensation.

**5.** Procédé selon au moins l'une des revendications précédentes, **caractérisé en ce que** pour la valeur absolue de compensation ($S_{off}$), des valeurs limites supérieures et inférieures en dessous de laquelle ou au-dessus de laquelle la valeur de compensation ($S_{off}$) ne peut être située sont fixées.

**6.** Procédé selon au moins l'une des revendications précédentes, **caractérisé en ce qu'**une valeur limite (8) est fixée au-dessus de laquelle une correction de la valeur de compensation ($S_{off}$) ne peut s'étendre.

**7.** Procédé selon au moins l'une des revendications précédentes, **caractérisé en ce que** pour la compensation du décalage, en plus du signal brut du capteur, un signal de référence ($S_{Ref}$) d'un autre capteur est utilisé (5) et représente indirectement la grandeur de mesure (par exemple le signal d'accélération) du capteur ou la valeur de mesure souhaitée (par exemple l'accélération) peut être déduite de ce signal, la différence ($S_{Dif}$) (6) entre le signal utile ($S_{Nutz}$) (4) à décalage compensé et le signal de référence ($S_{Ref}$) (5) est formé.

**8.** Procédé selon la revendication 7, **caractérisé en ce que** l'intégrale ou la somme ($S_{Sum}$) (9) est formée par l'intermédiaire de la différence ($S_{Dif}$) (6) dans les limites d'une plage de temps fixée ou en particulier d'une plage de déplacement, par exemple entre le débit et la fin d'une période d'allumage, à partir de laquelle la correction du décalage du capteur est déterminée.

**9.** Procédé selon la revendication 8, **caractérisé en ce qu'**un compteur ($Z_{Sum}$) est incrémenté (10) lors de chaque étape d'intégration ou chaque étape d'addition, le nombre des étapes d'intégration ou des étapes d'addition étant ainsi compté.

**10.** Procédé selon la revendication 9, **caractérisé en ce que** la valeur de correction de la compensation est déterminée selon la formule $S_{Delta} = S_{Sum}/Z_{Sum}$ (11).

**11.** Procédé selon au moins l'une des revendications 8 à 10, **caractérisé en ce qu'**un profil de hauteur de la conduite est déterminé à partir de la valeur ($S_{Sum}$).

**12.** Procédé selon au moins l'une des revendications 9 à 11, **caractérisé en ce que** le chemin parcouru est déterminé à partir du compteur ($Z_{Sum}$) (10).

**13.** Procédé selon au moins l'une des revendications précédentes, **caractérisé en ce qu'**une valeur prédéterminée est définie pour la distance parcourue et **en ce qu'**au cas où la distance parcourue est inférieure à la valeur prédéterminée, la valeur de compensation ($S_{off}$) doit être corrigée indépendamment de la distance parcourue.

**14.** Procédé selon au moins l'une des revendications précédentes, **caractérisé en ce que** des valeurs intermédiaires déjà déterminées, en particulier ($S_{Sum}$) et ($Z_{Sum}$) et/ou des valeurs de compensation ($S_{off}$) ou des valeurs de correction de la compensation sont conservées (1, 14, 15) dans une mémoire non volatile.

**15.** Procédé selon la revendication 14, **caractérisé en ce qu'**une valeur prédéterminée de la distance parcourue est définie et **en ce qu'**au cas où la distance parcourue est inférieure (17) à la valeur prédéterminée, des valeurs intermédiaires déjà déterminées, en particulier ($S_{Sum}$) et ($Z_{Sum}$), sont conservées (14, 15) dans une mémoire non volatile.

**16.** Procédé selon au moins l'une des revendications précédentes, **caractérisé en ce que** dans la compensation, des phases d'accélération ou de freinage sont constatées par interrogation, la compensation n'étant alors pas réalisée.

**17.** Procédé selon au moins l'une des revendications précédentes, **caractérisé en ce qu'**il vérifie si le signal d'entrée (16, 17) est affecté d'un défaut.

**18.** Procédé selon au moins l'une des revendications précédentes, **caractérisé en ce qu'**il vérifie si une situation de conduite inhabituelle prévaut.

**19.** Procédé selon la revendication 18, **caractérisé en ce qu'**il vérifie si au moins l'une des fonctions de régulation système antiblocage, contrôle de la traction, programme électronique de stabilité, assistant électronique de freinage, assistant hydraulique de freinage est activée.

**20.** Procédé selon au moins l'une des revendications précédentes, **caractérisé en ce qu'**il utilise un compteur d'erreurs (13).

**21.** Procédé selon la revendication 21, **caractérisé en ce que** le compteur d'erreurs (13) est incrémenté si un signal d'entrée (5) affecté d'une erreur et/ou une situation de conduit inhabituelle prévaut (12).

**22.** Produit de programme informatique **caractérisé en ce qu'**il contient un algorithme qui met en oeuvre le procédé selon au moins l'une des revendications 1 à 21 en association avec un microcalculateur.

**23.** Utilisation du procédé selon au moins l'une des revendications 1 à 21 dans un appareil électronique de commande de freinage.

Fig. 1

**EP 1 738 182 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003040856 A
- US 6253130 B
- EP 1288629 A